# EUROPÄISCHE PATENTSCHRIFT

(11) **EP 0 678 268 B1**
(45) Veröffentlichungstag und Bekanntmachung des Hinweises auf die Patenterteilung: **20.05.1998**
(21) Anmeldenummer: 95104100.3
(22) Anmeldetag: 20.03.1995
(51) Int. Cl.: A47J 43/07

(54) **Elektrisch betriebenes Handrührgerät zum Bearbeiten von Nahrungsmitteln**
Manual electric stirrer for processing foods
Appareil manuel et électrique de traitement d'aliments

(30) Priorität: 23.04.1994 DE 4414230
(43) Veröffentlichungstag der Anmeldung: 25.10.1995
(73) Patentinhaber: Braun Aktiengesellschaft, Frankfurt am Main (DE)
(72) Erfinder: Penaranda, Mariano, E-08005 Barcelona (ES); Masip, Josep-Maria, E-08035 Barcelona (ES); Rafols, Robert, E-08100 Sant Fost de Campcentelles (ES); Millan, Jose, E-08028 Barcelona (ES); Falco, Desideri, E-08026 Barcelona (ES)

(56) Entgegenhaltungen:
- EP-A- 0 341 410
- DE-A- 4 119 328
- DE-U- 8 232 415
- GB-A- 1 522 953

## Beschreibung

Elektrisch betriebenes Handrührgerät mit von einem Elektromotor zum Bearbeiten von Nahrungsmitteln antreibbaren Arbeitswerkzeugen wie Schneebesen, Knethaken und mit einem den Elektromotor aufnehmenden Gehäuse, an dem zum Halten des Handrührgerätes ein Handgriff ausgebildet ist, der im wesentlichen quer zur Längsachse der Arbeitswerkzeuge verläuft, wobei an dem den Arbeitswerkzeugen ferneren Ende aus dem Gehäuse ein Anschlußkabel herausragt, das in einem am Gehäuse herausschwenkbaren Knickschutzgelenk schwenkbeweglich geführt ist und wobei am Gehäuse eine Führungseinrichtung vorgesehen ist, die ein Aufwickeln des Anschlußkabels um das Gerät ermöglicht, wobei zusätzlich als Aufwickelvorrichtung das Knickschutzgelenk vorgesehen ist, welches in einer feststehenden Stellung zusammen mit der Aufwickelvorrichtung eine Führung des Anschlußkabels beim Aufwickeln ermöglicht.

Ein derartiges Handrührgerät ist beispielsweise bereits aus der EP-B-0 341 410 bekannt. Bei dieser Anordnung ist am Ende des Handgriffs ein in Richtung des Handgriffs schwenkbares Knickschutzgelenk ausgebildet, das die Handhabung des Handrührers erleichtert und das gleichzeitig ein Abknicken des Kabels, was über längere Zeit zu einem Kabelbruch führen könnte, verhindert. Beim Abstellen des Handrührers auf seiner Abstellfläche dient das Knickschutzgelenk auch noch dazu, daß das Kabel aus dem Wirkungsbereich der Abstellfläche herausgeschwenkt werden kann, was ein wackelfreies Abstellen des Handrührgerätes gewährleistet.

Aus der DE-U-82- 32 415 ist weiterhin ein elektrisch betriebenes Handrührgerät bekannt, bei dem eine umlaufende Rille am hinteren Ende des Gerätes als Aufwickelvorrichtung für das Anschlußkabel dient. Ein Abgleiten des Kabels ist hierbei leicht möglich.

Aufgabe der Erfindung ist es, ein Handrührgerät zu schaffen, bei dem mit äußerst einfachen Mitteln das Anschlußkabel einfach aufgewickelt werden kann und bei dem das so aufgewickelte Anschlußkabel anschließend seine ortsfeste Lage sicher beibehält und nicht allzu leicht wieder heruntergleitet.

Diese Aufgabe wird durch die kennzeichnenden Merkmale des Anspruchs 1 gelöst.

Dadurch, daß nach der Erfindung das aus dem Gehäuse herausragende und von dem Knickschutzgelenk geführte Anschlußkabel über das Knickschutzgelenk in eine derartige Stellung arretiert werden kann, daß dieses in Wickelrichtung gerichtet ist, wird es möglich, das Anschlußkabel besonders einfach um das Gerät zu wickeln, ohne daß es dabei wieder vom Gerät heruntergleitet. Sowohl die Rinne wie der Überstand des Knickschutzgelenkes müssen dabei zumindest so bemessen sein, daß auch bei besonders langen Anschlußkabeln diese nicht vom Gehäuse herunter gleiten. Durch die Arretierbarkeit mittels eines Rastgesperres am Knickschutzgelenk in der Wickelstellung wird nach der Erfindung vermieden, daß nach dem Wickelvorgang das Knickschutzgelenk in seine Gebrauchslage zurückschwenkt, so daß das Anschlußkabel sicher auf dem Gehäuse aufgewickelt bleibt. In der Gebrauchslage, wo das Knickschutzgelenk auch im wesentlichen quer zur Ebene der Aufwickelvorrichtung verlaufen kann, nämlich das Kabel vom Gerät herunter gleiten. Durch die Arretierbarkeit des Knickschutzgelenks wird eine besonders einfach zu realisierende und handhabbare Aufwickelvorrichtung für ein Handrührgerät geschaffen. Anstelle der Rinne konnte auch eine andere Führungsrichtung, wie beispielsweise ein Steg, verwendet werden.

Ein besonders sicherer Sitz des Kabels auf dem Handrührgerät wird durch die Merkmale des Patentanspruchs 2 erreicht, nämlich dann, wenn das Knickschutzgelenk im wesentlichen parallel zur Wickelrichtung verläuft. Es sind aber auch noch gewisse Schrägstellungen des Knickschutzgelenkes gegenüber der Wickelrichtung denkbar, durch die, je größer diese werden, der Halt des Kabels an der Wickelvorrichtung immer geringer wird.

Durch die Weiterbildung der Erfindung nach den Merkmalen des Patentanspruchs 3 wird eine besonders vorteilhafte Eigenschaft am Rastgesperre erreicht, nämlich dadurch, daß dieses nur dann in seine Raststellung gebracht werden kann, wenn dies von einer Bedienungsperson gewünscht wird; denn hierzu muß das Knickschutzgelenk von einer Bedienungsperson mit erhöhter Kraft in seine Wickelstellung gebracht werden, um anschließend das Anschlußkabel auf die Aufwickelvorrichtung aufzuwickeln. Auch ein Zurückbringen des Knickschutzgelenkes in seine Betriebslage ist nur wieder mit erhöhtem Kraftaufwand erforderlich. Ein selbsttätiges Rückstellen in die Gebrauchslage durch die Zug- Druckbelastungen des Kabels während der Handhabung des Handrührgerätes ist dabei nicht möglich.

Eine besonders einfache und sichere Befestigung des Anschlußkabels auf dem Handrührgerät ergibt sich nach den Merkmalen des Patentanspruchs 4. Dabei kann ein ausreichend großer Durchmesser für die Aufwickelvorrichtung gewählt werden, so daß kleine Biegeradien am Kabel, die ein selbsttätiges Abrollen des Anschlußkabels vom Handrührgerät begünstigen würden, weitgehendst vermieden werden können. Durch die Merkmale des Patentanspruchs 6 wird die Handhabung insbesondere dadurch vereinfacht, daß an gegenüberliegenden Stellen des Handrührgerätes die Führungseinrichtungen für das Aufwickeln des Anschlußkabels ausgebildet sind.

Durch die Merkmale des Patentanspruchs 7 ergibt sich ein besonders einfaches Rastgesperre, das ohne zusätzliche Bauteile auskommt. Gemäß den Merkmalen des Patentanspruchs 8 ergibt sich eine besonders sanfte und dennoch in seiner Sperrlage sicher haltende Versperrung des Rastgesperres. Durch die federnden Eigenschaften sowohl an der Klinke wie an der Nase wird ein dauerhaftes und robustes Rastgesperre geschaffen. Zusätzliche Kosten können bei der Herstellung des Rastgesperres durch die Merkmale des Patentanspruchs 9 vermieden werden.

Ein Ausführungsbeispiel der Erfindung ist in der Zeichnung dargestellt und wird im folgenden näher erläutert. Es zeigen:
- Fig. 1: Seitenansicht auf ein elektrisch betriebenes Handrührgerät mit teilweise dargestellten Arbeitswerkzeugen und mit einem am Gerät aufgewickelten Anschlußkabel,
- Fig. 2: Teilschnitt im Bereich des Knickschutzgelenkes, wobei das Knickschutzgelenk in der Gebrauchslage des Handrührgerätes dargestellt ist und
- Fig. 3: Teilausschnitt im Bereich des Knickschutzgelenkes gemäß Fig. 1, wobei allerdings das Knickschutzgelenk die zum Aufwickeln vorgesehene Raststellung eingenommen hat.

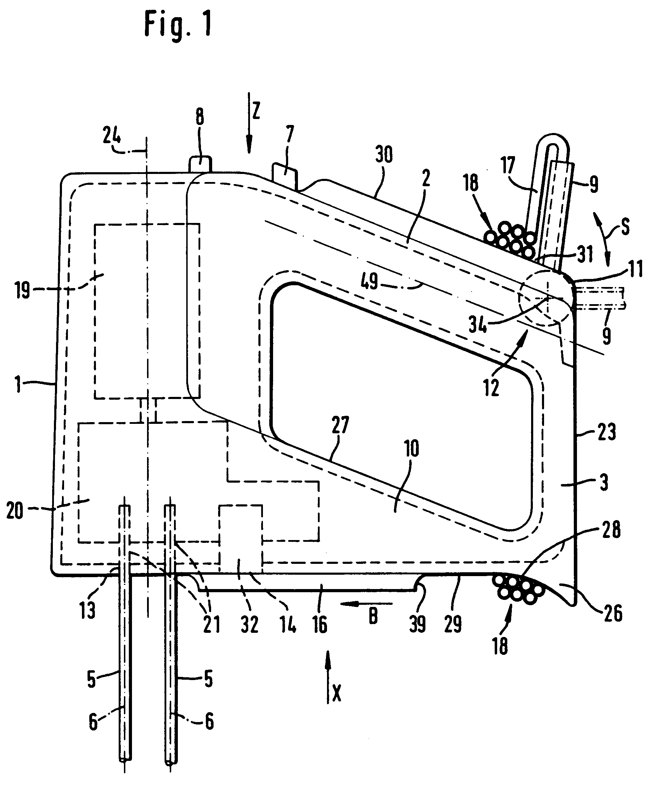

Zur Vermeidung von Wiederholungen sind in den Figuren 1 bis 3 für entsprechend gleiche Bauteile gleiche Positionsnummern gewählt.

Die Figur 1 zeigt das erfindungsgemäße Handrührgerät, das zum Zerkleinern, Kneten und Rühren etc. dient. Am im wesentlichen zylindrischen Motorgehäuse 1 mit dem darin untergebrachten Elektromotor 19 und der Getriebeeinrichtung 20 für die verschiedenen Arbeitswerkzeuge 5, beispielsweise Rühr-, Knet- und Zerkleinerungseinsätze, ist ein länglicher, von einer Hand bequem umschließbarer Handgriff 2 quer zum Motorgehäuse 1 und schräg nach unten gerichtet angeformt.

Am oberen Ende des Handgriffs 2 ist gemäß Figur 1 ein in Längsrichtung verrückbarer Stufenschalter 7 vorgesehen. An der Oberseite des Motorgehäuses 1 ragt eine Auswurftaste 8 heraus, bei deren Betätigung das jeweilige Arbeitswerkzeug 5 aus seiner am Getriebe 20 angeordneten Aufnahmeeinrichtung 21 entriegelt wird und über die entsprechende Einstecköffnung 13 aus dem Handrührgerät herausfällt. Die mit den Einrastmitteln (im einzelnen nicht näher dargestellt) verbundenen Einstecköffnungen 13, 14 mit ihren Aufnahmeöffnungen 21, 32 für die verschiedenen Arbeitswerkzeuge 5 sind am Getriebe 20 ausgebildet und setzen sich über die im Gehäuse 1 an der Unterseite ausgebildeten Einstecköffnungen 13, 14 nach außen fort, so daß von außen her die Arbeitswerkzeuge 5 über die Einstecköffnung 13, 14 in die Aufnahmeöffnungen 21, 32 des Getriebes 20 eingesetzt werden können. Wie aus Fig. 1 deutlich hervorgeht, verlaufen der Motor 19 und die Arbeitswerkzeuge 5 parallel auf gleicher Längsachse 24 bzw. 6., so daß aufwendige Winkelgetriebe, wenn der Motor 19 nicht senkrecht, sondern horizontal verlaufen würde, nicht notwendig sind. Das Getriebe 20 ist zwischen Motor 19 und den Arbeitswerkzeugen 5 im Gehäuse 1 angeordnet.

Bei kurzzeitigem Ausschalten oder auch im Betrieb kann das Handrührgerät bequem und sicher mit Hilfe eines am freien Ende des Handgriffs 2 angeformten, sich parallel zur Gerätekörperlängsachse 24 erstreckenden als Steg ausgebildeten Ansatzelementes 3 über seine Abstellfläche 23 auf einem nicht dargestellten Arbeitstisch abgestellt werden. Die vom Gehäuse 1 abgewandte Abstellfläche 23 des oben und unten abgerundeten Ansatzelements 3 ist daher in Fig. 1 als Stellfläche des Handgriffs ausgebildet und ermöglicht auch ein Aufstellen des mit Arbeitswerkzeugen 5 bestückten Handrührgerätes, ohne daß diese Arbeitswerkzeuge 5 die Arbeitsfläche des Tisches berühren, sondern sogar parallel zur Arbeitsfläche verlaufen.

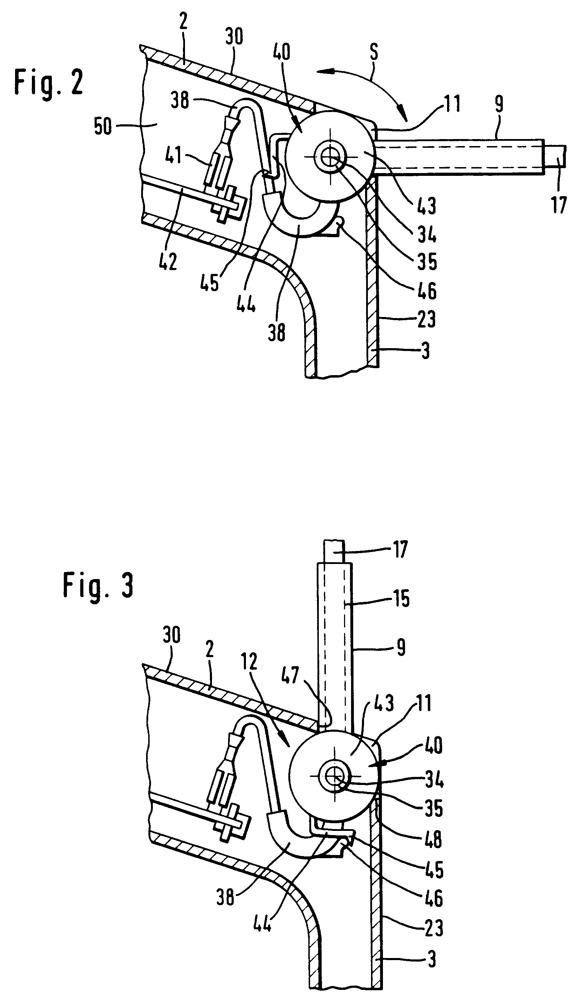

In Figur 1 ist das Handrührgerät um einen den unteren Bereich des Gehäuses 1 mit dem Ansatzelement 3 verbindenden Arm 10 erweitert. Dieser im wesentlichen senkrecht zum Gehäuse 1 und radial nach außen verlaufende Arm 10 bildet mit dem Ansatzelement 3, dem sich daran anschließenden Handgriff 2 und dem Gehäuse 1 eine homogene und stabile Kunststoffgehäuseoberfläche, wobei sich der seitlich abgerundete und oben und unten flach verlaufende Arm 10 (Fig. 1 und 2) vom Motorgehäuse 1 zum Ansatzelement 3 hin verjüngt. Der Ubergangsbereich vom Gehäuse 1 zum Arm 10 stellt also eine Erweiterung 27 dar, um teilweise Teile vom Getriebe 20 dort zu positionieren.

Das in Figur 1 dargestellte Handrührgerät weist aufgrund der eine geschlossene Gehäuseeinheit mit Motorgehäuse 1, Ansatzelement 3, Handgriff 2 und Arm 10 bildende Einheit eine erhöhte Stabilität auf. Die gezeigte Einheit ist als ein Kunststoffschalengehäuse aus mindestens zwei Teilen gefertigt wobei die Teillungsebene parallel zur Zeichenebene verläuft. Als Elektromotor 19 dient ein platzsparender Gleichstrommotor, so daß der Querschnitt und die axiale Baulänge (auch durch die Aufnahme von Getriebeteilen in der Erweiterung 27 bedingt) des Motorgehäuses 1 insgesamt erheblich verkleinert ist.

Die ebene und senkrecht zur Abstellfläche 23 verlaufende Unterseite 29 des Arms 10 weist eine hervorstehende Zunge 16 auf. Die längliche, an beiden Enden abgerundete Zunge 16 ist entgegen der Federkraft B einer nicht dargestellten Federeinrichtung verschiebbar, so daß bei Offenstellung der Zunge 16, die Bohrung 14 zur Aufnahme eines nicht dargestellten, als zusätzliches Arbeitswerkzeug dienenden Pürierstabes (nicht dargestellt) von diesem freigelegt ist.

Wird beispielsweise ein Pürierstab bei Betätigung der Auswurftaste 8 aus der Aufnahmeeinrichtung 32 entfernt, so schiebt sich die Zunge 16 selbsttätig durch Federkraft B in die erwähnte Schließstellung zurück und verdeckt die Einstecköffnung 14, was insbesondere bei Benutzung der anderen Arbeitswerkzeuge 5 (2 Knethaken oder 2 Schlagbesen) wichtig ist, die in im vorderen, runden Bereich des Abschnitts 4 in üblicher Weise nebeneinander angeordneten Einstecköffnungen 13 eingeführt und dort über die Aufnahmeeinrichtungen 21 verriegelt werden. Die Einstecköffnungen 13 dienen also zur Aufnahme von zwei Knethaken, Schlagbesen etc. Ein Herausnehmen dieser Arbeitswerkzeuge 5 erfolgt ebenfalls, wie beim Pürierstab, über die Auswurftaste 8.

In den Figuren 1 bis 3 ist an dem dem Motorgehäuse 1 abgewandten Ende des Handgriffs 2 am Übergang zum Steg 3 eine Öffnung 11 ausgebildet, aus der ein zylindrischer Abschnitt 9 eines Knickschutzgelenkes 12 herausragt. Der zylindrische Abschnitt 9 bildet eine Knickschutztülle für das die Bohrung 15 des zylindrischen Abschnittes 9 durchdringenden Anschlußkabels 17. Das Anschlußkabel ist nach Fig. 1 über einzelne Wicklungen um die Aufwickelvorrichtungen 18 gewickelt.

Die Aufwickelvorrichtung 18 besteht einerseits aus einer am unteren Arm 10 am äußeren Ende ausgebildeten Erweiterung 26, so daß sich zum Motorgehäuse 1 hin in diesem Bereich eine Art Rinne 28 ergibt. Andererseits bildet im oberen Bereich der zylindrische Abschnitt 9 des Knickschutzgelenkes 12 mit der nach oben zeigenden Mantelfläche 30 ebenfalls ein Teil der Aufwickelvorrichtung t 18, also eine Art Rinne 31, so daß in der in Fig. 1 dargestellten senkrechten Position des Knickschutzgelenkes 12 die Rinnen 28 und 31 eine gemeinsame Aufwickelvorrichtung 18 ergeben, in der das Anschlußkabel 17 leicht aufgewickelt und geschützt gelagert werden kann.

Nach den Figuren 1 bis 3 weist das Knickschutzgelenk 12 eine Drehachse 34 auf, um die das Knickschutzgelenk 12 gemäß der Pfeilführung S schwenkbar ist. Die Drehachse 34 verläuft senkrecht in die Zeichenebene und steht somit senkrecht auf der Längsachse 49 des Handgriffs 2. Die Drehachse 34 wird von an den Seitenflächen 43 des Knickschutzgelenkes 12 angeordneten Zapfen 35 gebildet, die in am innern des Handgriffs 2 ausgebildeten Lageraugen (nicht dargestellt) geführt sind.

Wie aus den Figuren 2 und 3 ersichtlich ist, tritt das Anschlußkabel 17 mit seinen einzelnen Stromleitern 38 aus den zwischen den beiden Zapfen 35 ausgebildeten Raum am Knickschutzgelenk 12 radial heraus und sind mittels Kontaktfahnen 41 mit einer Leiterplatte 42 in Innern 50 des Handgriffs 2 verbunden. Die Zapfen 35 sind an den Seitenwandungen 43 eines dosenförmigen Gehäuses 40 angeformt, an denen auch eine in Umfangsrichtung des Gehäuses 40 sich teilweise erstreckende Klinke 44 ausgebildet ist.

Die Klinke 44 weist einen nach außen gerichteten Vorsprung 45 auf, der gemäß Fig. 3 in der Wickelstellung des Knickschutzgelenkes 12 eine am Handgriff 2 ausgebildete Nase 46 hintergreift. Wird also gemäß Fig. 2 das Knickschutzgelenk 12 entgegen dem Uhrzeigersinn in Drehrichtung S bewegt, so wird die Klinke 44 beim Anschlagen an der Nase 46 derart von dieser weggebogen, daß beim Weiterdrehen diese letztendlich die Nase 46 federnd hintergreift (Fig. 3). Das Knickschutzgelenk 12 ist drehfest am Gehäuse 1 befestigt und das Anschlußkabel 17 kann gemäß Fig. 1 um das Gehäuse 1 gewickelt werden.

Bei Gebrauch des Gerätes kann nach Abwicklung des Anschlußkabels 17 vom Gehäuse 1 das Knickschutzgelenk 12 im Uhrzeigersinn gemäß der Drehrichtung S nach Fig., 2 verschwenkt werden, wobei aufgrund der federnden Nachgiebigkeit von Klinke 44 und Nase 46 diese aus ihrer Raststellung herausschnappen, so daß anschließend das Knickschutzgelenk 12 um seine Drehachse 34 frei beweglich ist, allerdings nur so weit, bis der zylindrische Abschnitt 9 an der oberen 47 bzw. unteren 48 Kannte des Handgriffs 2 bzw. des Ansatzelementes 3 anschlägt.

## Patentansprüche

1. Elektrisch betriebenes Handrührgerät mit von einem Elektromotor (11) zum Bearbeiten von Nahrungsmitteln antreibbaren Arbeitswerkzeugen (5) und mit einem den Elektromotor (19) aufnehmenden Gehäuse (1), an dem zum Halten des Handrührgerätes ein Handgriff (2) ausgebildet ist, der im wesentlichen quer zur Längsachse (6) der Arbeitswerkzeuge (5) verläuft, wobei an dem den Arbeitswerkzeugen (5) ferneren Ende aus dem Gehäuse (1) ein Anschlußkabel (17) herausragt, das in einem aus dem Gehäuse (1) herausschwenkbaren Knickschutzgelenk (12) schwenkbeweglich geführt ist, wobei am Gehäuse (1) eine Aufwickelvorrichtung (18) vorgesehen ist, die ein Aufwickeln des Anschlußkabels (17) um das Gerät ermöglicht und wobei zusätzlich als Aufwickelvorrichtung (18) das Knickschutzgelenk (12) vorgesehen ist, welches in einer Stellung zusammen mit der Aufwickelvorrichtung (28) eine Führung des Anschlußkabels (17) beim Aufwickeln ermöglicht,
**dadurch gekennzeichnet**,
daß das Knickschutzgelenk in eine feststehende Stellung bringbar ist und daß die feststehende Stellung durch ein am Knickschutzgelenk (12) ausgebildetes und mit dem Gehäuse (2, 3) zusammenwirkendes Rastgesperre (44, 46) erreicht wird.

2. Handrührgerät nach Anspruch 1,
**dadurch gekennzeichnet**,
daß sich in der feststehenden Stellung das Knickschutzgelenk (12) im wesentlichen längs der Ebene der Aufwickelvorrichtung (18) erstreckt.

3. Handrührgerät nach Anspruch 1,
**dadurch gekennzeichnet**,
daß das Rastgesperre (44, 46) so ausgebildet ist, daß die zur Erreichung der eingerasteten Stellung erforderliche Kraft größer ist als die Kraft, die im Betrieb des Handrührgerätes durch die Bewegung des Anschlußkabels (17) auf das Knickschutzgelenk (12) ausgeübt wird.

4. Handrührgerät nach Anspruch 3,
**dadurch gekennzeichnet,**
daß das Handrührgerät (2, 10) von zwei sich vom Motorgehäuse wegerstreckenden Armen (2, 10) gebildet wird und daß der untere Arm (10) mit einer Rinne (28) und der obere Arm (2) mit dem Knickschutzgelenk (12) versehen sind.

5. Handrührgerät nach Anspruch 4,
**dadurch gekennzeichnet,**
daß die Rinne (28) und das Knickschutzgelenk (12) an entgegengesetzten Flächen der Arme (2, 10) ausgebildet sind.

6. Handrührgerät nach Anspruch 5,
**dadurch gekennzeichnet,**
daß die Arme (2, 10) zur Bildung einer Abstellfläche (23) für das Handrührgerät an ihren freien Enden mit einem Steg (3) verbunden sind, der zusammen mit den freien Enden der Arme (2, 10) die Abstellfläche (23) bildet.

7. Handrührgerät nach Anspruch 6,
**dadurch gekennzeichnet,**
daß das Rastgesperre aus einer quer zur Längsachse des Handgriffs (2) schwenkbaren Drehachse (34) gebildet wird, das von dem Anschlußkabel (17) über eine Bohrung (15) durchdrungen wird und daß am Gehäuse (40) des Rastgesperres eine federnde Klinke (44) ausgebildet ist, die in eine am Gehäuse (2) des Handrührgerätes ausgebildete Nase (46) in der Wickelstellung rastend eingreift.

8. Handrührgerät nach Anspruch 7,
**dadurch gekennzeichnet,**
daß die Klinke (44) in Schwenkrichtung (S) des Knickschutzgelenks (12) verläuft und daß die Nase (46) von einem am Gehäuse (2) federnd ausgebildeten Zapfen gebildet wird.

9. Handrührgerät nach Anspruch 8,
**dadurch gekennzeichnet,**
daß die Klinke (44) und das Gehäuse des Knickschutzgelenks (12) einteilig aus Kunststoff ausgeformt sind.

## Claims

1. An electrically operated hand mixer including processing tools (5) drivable by an electric motor (11) for processing foods, and a housing (1) accommodating the electric motor (19), on which a handle (2) for manipulating the hand mixer is provided and extends substantially transversely to the longitudinal axis (6) of the processing tools (5), wherein a connecting cable (17) extends from the housing (1) at the end remote from the processing tools (5) and is swivellably guided in an antikink joint (12) adapted to be swung from the housing (1), wherein a winding-up arrangement (18) is provided on the housing (1) which permits winding the connecting cable (17) onto the appliance, the antikink joint (12) additionally serving as a winding-up arrangement (18) which, in one position, along with the winding-up arrangement (28) permits guiding the connecting cable (17) during the winding-up action,
**characterized** in that the antikink joint is movable into a fixed position, and in that the fixed position is achieved by a snap-in locking arrangement (44, 46) provided on the antikink joint (12) and interacting with the housing (2, 3).

2. A hand mixer as claimed in claim 1,
**characterized** in that, in the fixed position, the antikink joint (12) extends substantially along the plane of the winding-up arrangement (18).

3. A hand mixer as claimed in claim 1,
**characterized** in that the snap-in locking arrangement (44, 46) is provided such that the force which is required to reach the locked position is in excess of the force which is exerted on the antikink joint (12) by the movement of the connecting cable (17) during operation of the hand mixer.

4. A hand mixer as claimed in claim 3,
**characterized** in that the hand mixer (2, 10) is formed by two arms (2, 10) extending away from the motor housing, and in that the lower arm (10) is provided with a groove (28) and the upper arm (2) is provided with the antikink joint (12).

5. A hand mixer as claimed in claim 4,
**characterized** in that the groove (28) and the antikink joint (12) are provided on opposed surfaces of the arms (2, 10).

6. A hand mixer as claimed in claim 5,
**characterized** in that, for forming a bottom surface (23) for placing the hand mixer, the free ends of the arms (2, 10) are connected with a web (3) which, along with the free ends of the arms (2, 10), forms the bottom surface (23).

7. A hand mixer as claimed in claim 6,
**characterized** in that the snap-in locking arrangement comprises an axis of rotation (34), which is swivellable transversely to the longitudinal axis of the handle (2), and is penetrated by the connecting cable (17) extending through a bore (15), and in that a resilient pawl (44) is provided on the housing (40) of the snap-in locking arrangement and, in the winding-up position, the pawl lockingly engages a nose (46) provided on the housing (2) of the hand mixer.

8. A hand mixer as claimed in claim 7,
**characterized** in that the pawl (44) extends in the swivelling direction (S) of the anti-kink joint (12), and in that the nose (46) is formed of a peg resiliently provided on the housing (2).

9. A hand mixer as claimed in claim 8,
**characterized** in that the pawl (44) and the housing of the antikink joint (12) are integrally formed of plastic material.

## Revendications

1. Mixeur électrique manuel comportant des outils de travail (5) pouvant être entraînés par un moteur électrique (11) pour le traitement d'aliments, ainsi qu'un capot (1) qui loge le moteur électrique (19) et sur lequel est formée, pour permettre de tenir le mixeur électrique manuel, une poignée (2) qui est orientée sensiblement transversalement par rapport à l'axe longitudinal (6) des outils de travail (5), dans le cas duquel à l'extrémité éloignée des outils de travail (5) sort du capot (1) un câble de raccordement (17) qui est guidé, avec liberté de pivotement, dans une articulation de protection anticroquage (12) qui sort du capot (1) et peut pivoter, étant précisé que sur le capot (1) est prévu un dispositif d'enroulement (18) qui permet un enroulement du câble de raccordement (17) autour du mixeur et étant précisé en outre qu'est prévu comme dispositif d'enroulement (18) l'articulation de protection anticroquage (12) qui, dans une position, permet, avec le dispositif d'enroulement (28), un guidage du câble de raccordement (17) lors de l'enroulement,
caractérisé par le fait
que l'articulation de protection anticroquage peut être amenée dans une position fixe et que la position fixe s'atteint au moyen d'un verrou de crantage (44, 46) qui est prévu sur l'articulation de protection anticroquage (12) et collabore avec le capot (2, 3).

2. Mixeur manuel selon la revendication 1,
caractérisé par le lait
que dans la position fixe l'articulation de protection anticroquage (12) s'étend sensiblement le long du plan du dispositif d'enroulement (18).

3. Mixeur manuel selon la revendication 1,
caractérisé par le fait
que le verrou de crantage (44, 46) est conçu de façon que la force nécessaire pour atteindre la position crantée soit supérieure à la force exercée, lorsque le mixeur est en service, par le mouvement du câble de raccordement (17) sur l'articulation de protection anticroquage (12).

4. Mixeur manuel selon la revendication 3,
caractérisé par le fait
que le mixeur manuel (2, 10) est formé de deux bras (2, 10) s'étendant en sens opposé au capot du moteur et que le bras inférieur (10) présente une rigole (28) et le bras supérieur (2), l'articulation de protection anticroquage (12).

5. Mixeur manuel selon la revendication 4,
caractérisé par le fait
que la rigole (28) et l'articulation de protection anticroquage (12) sont prévues sur des surfaces opposées des bras (2, 10).

6. Mixeur manuel selon la revendication 5,
caractérisé par le fait
que les bras (2, 10) sont, pour former une surface de pose (23) pour le mixeur manuel, reliés, à leurs extrémités libres, par une traverse (3) qui forme, avec les extrémités libres des bras (2, 10), la surface de pose (23).

7. Mixeur manuel selon la revendication 6,
caractérisé par le fait
que le verrou de crantage est formé d'un axe de rotation (34) qui peut pivoter perpendiculairement à l'axe longitudinal de la poignée (2), verrou à travers lequel passe, par un alésage (15), le câble de raccordement (17) et que sur le capot (40) du verrou de crantage est prévu un cliquet élastique (44) qui, en position d'enroulement, vient se cranter dans un talon (46) prévu sur le capotage (2) du mixeur manuel.

8. Mixeur manuel selon la revendication 7,
caractérisé par le fait
que le cliquet (44) est orienté selon la direction de pivotement (S) de l'articulation de protection anticroquage (12) et que le talon (46) est formé d'un téton élastique prévu sur le capot (2).

9. Mixeur manuel selon la revendication 8,
caractérisé par le fait
que le cliquet (44) et le boîtier de l'articulation de protection anticroquage (12) sont moulés d'une seule pièce en plastique.
